Europäisches Patentamt

European Patent Office

Office européen des brevets

(19)

(11) EP 0 517 069 B1

(12) **FASCICULE DE BREVET EUROPEEN**

(45) Date de publication et mention
de la délivrance du brevet:
**27.03.1996   Bulletin 1996/13**

(51) Int Cl.6: **H01M 10/40, H01M 4/58**

(21) Numéro de dépôt: **92108841.5**

(22) Date de dépôt: **26.05.1992**

(54) **Générateur électrochimique rechargeable à électrolyte solide**

Wiederaufladbare elektrochemische Zelle mit festem Elektrolyt

Rechargeable electrochemical cell with solid electrolyte

(84) Etats contractants désignés:
**CH DE ES FR GB IT LI NL SE**

(30) Priorité: **31.05.1991 FR 9106589**

(43) Date de publication de la demande:
**09.12.1992   Bulletin 1992/50**

(73) Titulaire: **ALCATEL ALSTHOM COMPAGNIE
GENERALE D'ELECTRICITE
F-75382 Paris Cédex 08 (FR)**

(72) Inventeurs:
 • **Simon, Bernard
   F-75016 Paris (FR)**
 • **Boeuve, Jean-Pierre
   F-91460 Marcoussis (FR)**

(74) Mandataire: **Weinmiller, Jürgen et al
   Lennéstrasse 9
   Postfach 24
   D-82336 Feldafing (DE)**

(56) Documents cités:
   **EP-A- 0 404 578        WO-A-90/13924**

## Description

La présente invention concerne un générateur électrochimique rechargeable à électrolyte solide, dont la matière active négative est à base de lithium.

L'élaboration d'un tel générateur rechargeable, "tout solide" de potentiel élevé, présente un grand intérêt compte tenu des avantages importants qu'il est susceptible d'apporter : souplesse, pas de risque de fuite, pas de séparateur.

Pour réaliser l'électrolyte d'un tel générateur, on dispose de polymères conducteurs ioniques qui ne sont utilisables qu'à une température supérieure à la température ambiante. Le brevet US.A. 4 303 748 décrit par exemple le polyéthylène oxyde (PEO) plastifié, incorporant un sel métallique, mais nécessitant une température de fonctionnement de 80°C. Le brevet US.A. 4 830 939 décrit un générateur contenant un électrolyte de ce type.

Pour abaisser la température de fonctionnement à la température ambiante, le brevet US.A 4 792 504 propose l'emploi de polymères conducteurs réticulés contenant une phase conductrice ionique comprenant un sel métallique et un solvant dipolaire aprotique. Le brevet FR-A- 2 653 938 décrit un générateur à anode de lithium mettant en oeuvre un tel polymère. On observe toutefois au cours du cyclage des changements de forme de l'électrode de lithium dus à la croissance de dendrites qui ont des conséquences néfastes, telles que risques de courts-circuits et rendement en cyclage diminué.

Pour éviter ces inconvénients, on a envisagé de remplacer l'anode de lithium métallique par une anode en graphite intercalant le lithium (voir article R. Yazami, Ph. Touzain, J. Power Sources 9, 1983, p. 365). Mais on constate que le graphite naturel ou artificiel associé aux polymères conducteurs ioniques contenant un solvant précédemment cités aboutit lors du fonctionnement à une baisse de capacité et à un gonflement important de l'anode pouvant entraîner une exfoliation du graphite.

La présente invention a pour but de réaliser un générateur électrochimique rechargeable du type précédent mais dont l'anode à base de carbone conserve ses qualités au cours du cyclage.

La présente invention a pour objet un générateur électrochimique rechargeable comprenant une cathode, une anode à base d'un matériau carboné capable d'intercaler des ions lithium, et un électrolyte constitué d'un polymère réticulé, de préférence conducteur ionique, incorporant un sel de lithium et un solvant aprotique dipolaire, caractérisé par le fait que ladite anode est constituée d'un mélange dudit électrolyte et dudit matériau carboné, ce dernier étant au moins superficiellement, moins bien cristallisé que le graphite, de manière à être imperméable audit solvant, tout en permettant la diffusion du lithium.

Selon un premier mode de réalisation ledit matériau carboné est choisi parmi les cokes, les fibres de carbone graphitées, les carbones pyrolithiques. Ces carbones présentent des cristallites de taille réduite, et un certain nombre de défauts structuraux, comme des atomes de carbone interstitiels entre les plans, ou une désorientation de ces plans entre eux.

L'anode du générateur selon l'invention empêche la cointercalation du solvant responsable du gonflement au cours du cyclage. Il faut remarquer cependant que les imperfections de structure limitent la cinétique d'intercalation du lithium ; c'est pourquoi il peut être avantageux d'utiliser un matériau à base de graphite très bien cristallisé recouvert superficiellement d'une couche mince de carbone incomplètement graphité.

Une telle couche peut être obtenue par carbonisation d'un film de polymère, tel que du polyacrylonitrile, ou par dépôt en phase vapeur (procédé CVD) à partir d'un hydrocarbure, par exemple le méthane ou le benzène.

Le polymère de l'électrolyte est de préférence un polymère conducteur ionique réticulé du genre de ceux décrits dans le brevet FR-A- 2 653 938.

Un tel polymère incorpore un sel conducteur dont le cation est le lithium et dont l'anion est de préférence choisi parmi $AsF_6^-$, $BF_4^-$, $PF_6^-$, $CF_3SO_3^-$, $ClO_4^-$, $B(C_6H_5)_4^-$, $N(CF_3SO_2)_2^-$, $SCN^-$.

Le solvant non aqueux est de préférence choisi parmi le carbonate d'éthylène, le carbonate de propylène, le tétrahydrofuranne, le diméthylcarbonate, le diéthylcarbonate, le formiate de méthyle, le diméthylsulfite, le diméthylsulfoxyde, le 1-2 diméthoxyéthane, le sulfolane, la g-butyrolactone, le polyéthylène glycol diméthyléther, et leurs mélanges.

La cathode est une électrode composite constituée d'un matériau à haut potentiel redox (tel par exemple, $LiV_2O_5$, $LiCoO_2$, la polyaniline ou le polypyrrole à l'état réduit, dopé par l'ion lithium), dudit électrolyte, et éventuellement d'une poudre conductrice (telle par exemple le noir de carbone ou le graphite).

D'autres caractéristiques et avantages de la présente invention apparaîtront au cours de la description suivante d'un mode de réalisation donné à titre illustratif mais nullement limitatif.

On prépare un électrolyte, une anode et une cathode de la manière suivante :

- L'électrolyte solide polymère est réalisé en mélangeant 0,5 g de polyoxyéthylène (20 000)bis (amine), 0,1 g de $LiAsF_6$, 15 µl d'éthylène glycol diglycidyléther en tant que durcisseur, 0,7 g de carbonate de propylène en tant que plastifiant.
  La réticulation se fait à 70° C pendant 16h.
- L'anode est obtenue de la même façon en ajoutant au mélange 2 g de poudre de carbone vendu sous la dénomination M-2007S (Kureha).
- La cathode est obtenue de la même façon en ajoutant au mélange 1,5 g de $LiCoO_2$ (vendu par la société Aldrich) et 0,03 g de noir de carbone. Le mélange est déposé avant réticulation sur un collecteur de titane pour former une couche d'épaisseur voulue (environ 1 mm).

Un générateur est constitué par un montage de type bouton en empilant les trois constituants anode - électrolyte - cathode précédents, sous forme de tranches de diamètre 15 mm, d'épaisseur 1 mm pour l'anode, 0,05 mm pour l'électrolyte et 1 mm pour la cathode.

Le générateur est chargé jusqu'à 4,2 V à une densité de courant 0,25 mA/cm$^2$.

La capacité cyclée entre 3 et 4,2 V est de 150 mAh/g de carbone de l'anode et reste stable plus de 500 cycles.

Bien entendu, l'invention n'est pas limitée au mode de réalisation qui vient d'être décrit. On pourra, sans sortir du cadre de l'invention, remplacer tout moyen par un moyen équivalent.

## Revendications

1. Générateur électrochimique rechargeable comprenant une cathode, une anode à base d'un matériau carboné capable d'intercaler des ions lithium, et un électrolyte constitué d'un polymère réticulé incorporant un sel de lithium et un solvant aprotique dipolaire, caractérisé par le fait que ladite anode est constituée d'un mélange dudit électrolyte et dudit matériau carboné, ce dernier étant, au moins superficiellement, moins bien cristallisé que le graphite de manière à être imperméable audit solvant, tout en permettant la diffusion du lithium.

2. Générateur électrochimique selon la revendication 1, caractérisé par le fait que ledit matériau carboné est choisi parmi les cokes, les fibres de carbone graphitées, les carbones pyrolithiques.

3. Générateur électrochimique selon la revendication 1, caractérisé par le fait que ledit matériau carboné comporte superficiellement un dépôt obtenu par un procédé CVD à partir d'un hydrocarbure.

4. Générateur électrochimique selon la revendication 1, caractérisé par le fait que ledit matériau carboné comporte superficiellement un dépôt obtenu par carbonisation d'un film de polymère, tel que le polyacrylonitrile.

5. Générateur électrochimique selon l'une des revendications précédentes, caractérisé par le fait que ledit électrolyte est un polymère conducteur réticulé incorporant un sel métallique dont l'anion est choisi parmi $AsF_6^-$, $BF_4^-$, $PF_6^-$, $CF_3SO_3^-$, $ClO_4^-$, $B(C_6H_5)_4^-$, $N(CF_3SO_2)_2^-$, $SCN^-$ et un solvant non aqueux choisi parmi le carbonate d'éthylène, le carbonate de propylène, le tétrahydrofuranne, le diméthylcarbonate, le diéthylcarbonate, le formiate de méthyle, le diméthylsulfite, le diméthylsulfoxyde, le 1-2 diméthoxyéthane, le sulfolane, la g-butyrolactone, le polyéthylène glycol diméthyléther, et leurs mélanges.

6. Générateur électrochimique selon la revendication 5, caractérisé par le fait que ledit polymère conducteur réticulé est choisi parmi les polyéthers, tels que le polyéthylène oxyde et le polypropylène oxyde, ou un copolymère des deux précédents

7. Générateur électrochimique selon l'une des revendications précédentes, caractérisé par le fait que ladite cathode est une électrode composite constituée d'un matériau à haut potentiel redox, dudit électrolyte et de poudre conductrice, telle que le noir de carbone ou le graphite.

8. Générateur électrochimique selon la revendication 7, caractérisé par le fait que ledit matériau à haut potentiel redox est choisi parmi $LiV_2O_5$, $LiCoO_2$, la polyaniline et le polypyrrole à l'état réduit, dopés par l'ion lithium.

## Patentansprüche

1. Wiederaufladbarer elektrochemischer Generator mit einer Kathode, einer Anode auf der Basis eines Kohlenstoffmaterials, das Lithiumionen einbauen kann, und mit einem Elektrolyten, bestehend aus einem vernetzten Polymer, das ein Lithiumsalz und ein bipolares aprotisches Lösungsmittel enthält, dadurch gekennzeichnet, daß die Anode aus einer Mischung des Elektrolyten und des Kohlenstoffmaterials besteht, wobei letzteres zumindest oberflächlich weniger gut als Graphit kristallisiert ist, so daß es für das Lösungsmittel undurchlässig ist, ohne jedoch die Diffusion von Lithium zu verhindern.

2. Elektrochemischer Generator nach Anspruch 1, dadurch gekennzeichnet, daß das Kohlenstoffmaterial unter Koks, graphitierten Kohlenstofffasern und pyrolithischem Kohlenstoff ausgewählt wird.

3. Elektrochemischer Generator nach Anspruch 1, dadurch gekennzeichnet, daß das Kohlenstoffmaterial oberflächlich eine Schicht enthält, die durch ein CVD-Verfahren ausgehend von einem Kohlenwasserstoff aufgebracht wurde.

4. Elektrochemischer Generator nach Anspruch 1, dadurch gekennzeichnet, daß das Kohlenstoffmaterial oberflächlich eine Schicht enthält, die durch Karbonisierung einer Schicht eines Polymers erhalten wird, wie z.B. Polyacrylonitril.

5. Elektrochemischer Generator nach Anspruch 1, dadurch gekennzeichnet, daß der Elektrolyt ein vernetztes leitendes Polymer ist, das ein Metallsalz enthält, dessen Anion ausgewählt wird unter $AsF_6^-$, $BF_4^-$, $PF_6^-$, $CF_3SO_3^-$, $ClO_4^-$, $B(C_6H_5)_4^-$, $N(CF_3SO_2)_2^-$, $SCN^-$, und ein nicht-wässriges Lösungsmittel enthält, das aus Äthylenkarbonat, Propylenkarbonat, Tetrahydrofuran, Dimethylkarbonat, Diäthylkarbonat, Methylformiat, Dimethylsulfit, Dimethylsulfoxid, 1-2-Dimethoxyäthan, Sulfolan, g-Butyrolakton, Dimethyläther-Polyäthylenglykol und ihren Mischungen ausgewählt ist.

6. Elektrochemischer Generator nach Anspruch 5, dadurch gekennzeichnet, daß das vernetzte leitende Polymer aus einem Polyäther, aus Polyäthylenoxid und Polypropylenoxid oder einem Kopolymer dieser beiden Stoffe ausgewählt ist.

7. Elektrochemischer Generator nach einem der vorhergehenden Ansprüche, dadurch gekennzeichnet, daß die Kathode eine Verbundelektrode ist, die aus einem Material mit hohem Redox-Potential, aus dem Elektrolyten und aus einem leitfähigen Pulver wie z.B. Kohlenstoffruß oder Graphit gebildet wird.

8. Elektrochemischer Generator nach Anspruch 7, dadurch gekennzeichnet, daß das Material mit hohem Redoxpotential ausgewählt wird unter $LiV_2O_5$, $LiCoO_2$, Polyanilin oder Polypyrrol im reduzierten Zustand, dotiert mit dem Lithiumion, ausgewählt wird.

## Claims

1. Rechargeable cell comprising a cathode, an anode based on a carbonaceous material capable of intercalation of lithium ions and an electrolyte constituted by a cross-linked polymer incorporating a lithium salt and a dipolar aprotic solvent, characterised in that said anode is constituted by a mixture of said electrolyte and said carbonaceous material, the latter being at least at the surface less well crystallised than the graphite so as to be impermeable to said solvent, while allowing diffusion of the lithium.

2. Cell according to claim 1 characterised in that said carbonaceous material is selected from cokes, graphitised carbon fibres, pyrolitic carbons.

3. Cell according to claim 1 characterised in that said carbonaceous material carries a surface deposit obtained by a CVD process from a hydrocarbon.

4. Cell according to claim 1 characterised in that said carbonaceous material carries a surface deposit obtained by carbonisation of a film of a polymer such as polyacrylonitrile.

5. Cell according to any one of the preceding claims characterised in that said electrolyte is a cross-linked conductive polymer incorporating a metallic salt the anion of which is selected from $AsF_6^-$, $BF_4^-$, $PF_6^-$, $CF_3SO_3^-$, $ClO_4^-$, $B(C_6H_5)_4^-$, $N(CF_3SO_2)_2^-$, $SCN^-$ and a non-aqueous solvent selected from ethylene carbonate, propylene carbonate, tetrahydrofuran, dimethylcarbonate, diethylcarbonate, methyl formate, dimethylsulfite, dimethylsulfoxide, 1-2 dimethoxyethane, sulfolane, g-butyrolactone, polyethylene glycol dimethylether and mixtures thereof.

6. Cell according to claim 5 characterised in that said cross-linked conductive polymer is selected from polyethers such as polyethylene oxide and polypropylene oxide or a copolymer thereof.

7. Cell according to any one of the preceding claims characterised in that said cathode is a composite electrode constituted by a material having a high redox potential, said electrolyte and conductive powder such as carbon black or graphite.

8. Cell according to claim 7 characterised in that said material having a high redox potential is selected from $LiV_2O_5$, $LiCoO_2$, polyaniline and reduced polypyrrole, doped with lithium ions.